# FASCICULE DE BREVET EUROPEEN

(11) **EP 4 094 960 B1**
(45) Date de publication et mention de la délivrance du brevet: **24.04.2024**
(21) Numéro de dépôt: 22174879.1
(22) Date de dépôt: 23.05.2022
(51) Int. Cl.: B60G 7/02, B60G 21/05

(54) **TRAIN ARRIERE POUR VEHICULE AUTOMOBILE DU TYPE A DEUX BRAS TIRES LONGITUDINAUX A COMPORTEMENT ELASTIQUE AMELIORE**
HINTERRADAUFHÄNGUNG FÜR KRAFTFAHRZEUG MIT ZWEI LÄNGSLENKERN UND VERBESSERTEM ELASTISCHEM VERHALTEN
REAR SUSPENSION OF A MOTOR VEHICLE OF THE TYPE WITH TWO LONGITUDINAL TRAILING ARMS WITH IMPROVED ELASTIC BEHAVIOUR

(30) Priorité: 24.05.2021 FR 2105372
(43) Date de publication de la demande: 30.11.2022
(73) Titulaire: Renault s.a.s, 92100 Boulogne Billancourt (FR)
(72) Inventeur: Rollet, Rémi, 78084 GUYANCOURT CEDEX (FR)

(56) Documents cités:
- FR-A1- 2 806 665
- FR-A1- 2 836 525
- FR-A1- 2 894 881
- JP-A- S5 853 506

## Description

L'invention a pour objet un train arrière pour véhicule automobile du type à deux bras tirés longitudinaux, en particulier un train arrière à comportement élastique amélioré.

On connaît depuis de nombreuses années des trains arrière de véhicule automobile à deux bras tirés reliés chacun à la caisse du véhicule par une articulation élastique, les extrémités des bras tirés opposées à celles articulées à la caisse recevant les roues arrière du véhicule.

FR 2806665 divulgue un train arrière de véhicule connu conformément au préambule de la revendication 1.

Ce type de train arrière est particulièrement adapté pour les véhicules utilitaires devant porter des charges élevées car il présente l'avantage d'être résistant en endurance. Il présente néanmoins un confort moindre par rapport à un train arrière dont les bras longitudinaux sont reliés par une traverse.

Les trains arrière à deux bras longitudinaux reliés par une traverse peuvent être reliés à la caisse par des articulations procurant un certain confort aux occupants du véhicule. Il est toutefois difficile de réaliser une liaison traverse/bras qui tienne en endurance en raison des déformations imposées en roulis.

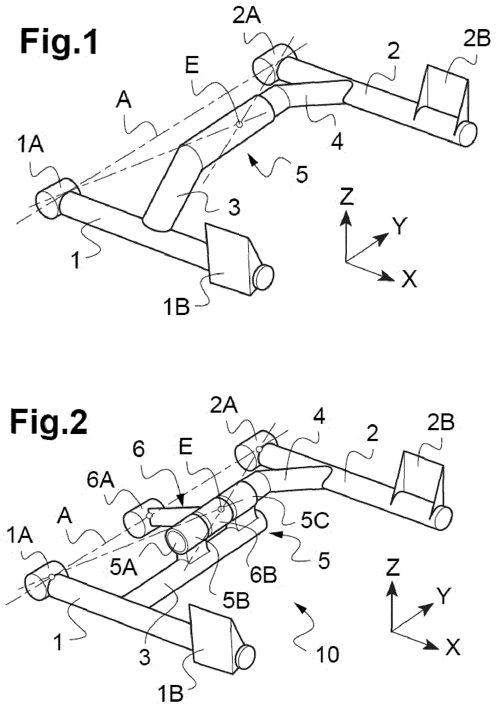

Une alternative consiste à réaliser un train arrière du type « train tube » représenté figure 1. Ce type de train arrière présente deux bras tirés longitudinaux 1, 2 comportant chacun un support de roue 1B, 2B à leur extrémité arrière. Ces bras tirés 1, 2 sont reliés par deux bras transversaux 3, 4 dont les extrémités libres sont montées à pivot au niveau d'un plan vertical longitudinal situé en une position médiane transversalement du véhicule. Cette liaison pivot centrale 5, d'axe de rotation transversal, est généralement située en arrière des extrémités avant 1A, 2A des bras tirés, lesquelles sont montées articulées sur la caisse du véhicule autour d'un même axe transversal A. La liaison pivot centrale 5 est aussi positionnée dans un plan situé au dessus, verticalement, de cet axe de rotation A du train arrière. Le centre de torsion équivalent E du train arrière se situe alors sensiblement au niveau du centre de cette liaison pivot centrale 5. Si la cinématique de cette construction est équivalente à celle d'un train arrière souple avec traverse, elle présente une flexibilité en flexion de l'ensemble central généralement trop élevée.

Il existe donc un besoin pour un train arrière à bras tirés du type précité présentant un comportement élastique amélioré, notamment moins flexible.

A cet effet, il est proposé un train arrière de véhicule automobile du type à deux bras tirés longitudinaux, dans lequel chaque bras tiré présente une extrémité avant destinée à être reliée à la caisse du véhicule par une articulation d'axe transversal et un support de fusée à une extrémité arrière. Le train arrière comporte en outre deux bras transversaux présentant chacun une extrémité solidaire d'un bras tiré et reliés l'un à l'autre par une liaison pivot d'axe de rotation transversal située en une position médiane transversalement du train arrière, en arrière des extrémités avant des bras tirés et au dessus verticalement d'un axe de rotation du train arrière défini par les extrémités avant des deux bras tirés. Cet axe de rotation du train arrière est ainsi confondu avec les axes de rotation des articulations reliant chaque bras tiré à la caisse.

Selon l'invention, le train arrière comprend une biellette présentant une extrémité avant destinée à être reliée à la caisse du véhicule par une articulation présentant au moins un axe de rotation transversal et au moins un axe de rotation longitudinal et une extrémité arrière reliée à la liaison pivot par une articulation d'axe de rotation transversal.

La liaison pivot centrale étant désormais reliée à la caisse, la flexibilité du train arrière selon l'invention et ses déformations sont réduites, améliorant son comportement élastique.

L'articulation présentant au moins un axe de rotation transversal et au moins un axe de rotation longitudinal, peut être une articulation de type rotule, aussi appelée « articulation rotulante » et peut notamment présenter encore au moins un autre axe de rotation. Typiquement, l'articulation pourra permettre une amplitude de rotation plus importante autour de l'axe transversal qu'autour de l'axe longitudinal, mais une rotation autour de l'axe longitudinal, même de faible amplitude, est nécessaire afin d'assurer une liberté de mouvement suffisante pour fonctionner.

Avantageusement, l'extrémité avant de la biellette peut être située à mi-distance des extrémités avant des bras tirés, en alignement avec les extrémités avant de ceux-ci. En particulier, l'axe de rotation transversal de l'articulation reliant l'extrémité avant de la biellette à la caisse est alors confondu avec l'axe de rotation du train arrière. Cette configuration permet au train de débattre en pompage sans difficulté.

Avantageusement, l'extrémité avant de la biellette peut être située à mi-distance des extrémités avant des bras tirés, dans un plan horizontal situé verticalement sous les extrémités avant des bras tirés. En particulier, l'axe de rotation transversal de l'articulation reliant l'extrémité avant de la biellette à la caisse est alors situé dans un plan horizontal situé sous cet axe de rotation verticalement. L'abaissement de l'extrémité avant de la biellette par rapport à aux extrémités avant du train arrière (correspondant aux extrémités avant des bras tirés) permet de limiter une augmentation de la pince lorsque le véhicule est chargé, cette augmentation de la pince étant liée au contre carrossage de la roue, qui, lorsque celle-ci monte dans le passage de roue, se transforme cinématiquement en pince. Notamment, l'extrémité avant de la biellette peut être située dans un même plan vertical et transversal que les extrémités avant du train arrière. Notamment, l'axe de rotation transversal de l'articulation reliant la biellette à la caisse peut être situé dans un même plan vertical et transversal que l'axe de rotation du train arrière.

Avantageusement, le plan, notamment horizontal, contenant l'extrémité avant de la biellette peut être situé à une distance d'un plan parallèle, notamment horizontal, contenant les extrémités avant des bras tirés, non nulle, inférieure ou égale à une valeur seuil. Cette valeur seuil pourra être déterminée par calcul, notamment afin de minimiser des variations de parallélisme des roues entre une utilisation en charge et à vide du véhicule.

La liaison pivot centrale est dans un plan, notamment un plan perpendiculaire à la direction verticale, situé au dessus verticalement de l'axe de rotation du train arrière. La biellette se trouve ainsi inclinée par rapport à un plan horizontal lorsque le train arrière est dans une position d'utilisation, monté sur un véhicule reposant sur un sol horizontal. L'inclinaison de la biellette dépend ainsi de la position verticalement de la liaison pivot centrale et de la distance séparant la liaison pivot centrale de l'axe de rotation du train arrière. De manière générale, la position verticale de la liaison pivot induit un braquage sous-vireur en roulis. Cette position verticale peut donc être déterminée en fonction du comportement sous-vireur en braquage souhaité. Typiquement, la liaison pivot peut être située dans un plan, notamment un plan perpendiculaire à la direction verticale, situé à une distance de l'axe de rotation du train arrière de 10 à 50mm, notamment de 15 à 40mm ou être comprise dans un intervalle défini par deux quelconques de ces limites, dans une position d'utilisation à vide du train arrière, dans laquelle il est monté dans un véhicule reposant sur un sol horizontal.

Quelque soit le mode de réalisation, la biellette peut ainsi être inclinée par rapport à un plan horizontal d'un angle de 3 à 30°, de 5 à 25° ou être compris dans un intervalle défini par deux quelconques de ces limites, le train arrière étant dans une position d'utilisation à vide, dans laquelle il est monté dans un véhicule reposant sur un sol horizontal.

Typiquement, l'extrémité avant de la biellette pourra être reliée à la caisse du véhicule par une articulation élastique ou une rotule et son extrémité arrière pourra être reliée à la liaison pivot centrale par une articulation équipée d'un roulement, tel que roulement à aiguilles, ou par une articulation élastique, ou encore par une bague en polymère glissant en rotation, voire par une rotule traversante.

Dans un mode de réalisation, la liaison pivot centrale peut comprendre un cylindre interne emboîté avec pivotement à l'intérieur d'un cylindre externe, chaque cylindre d'axe transversal étant solidaire de l'un des bras transversaux. L'extrémité arrière de la biellette peut alors comprendre un cylindre emboîté sur le cylindre externe de la liaison pivot. Ceci permet de mettre en place la biellette sur un train arrière existant du type de celui représenté figure 1 sans avoir à le modifier profondément. Chaque cylindre peut notamment être solidaire d'une extrémité d'un bras transversal et s'étendre dans le prolongement de celle-ci suivant la direction transversale.

Ce mode de réalisation peut toutefois s'avérer relativement encombrant verticalement du fait de l'ajout d'un cylindre autour du cylindre externe de la liaison pivot pour relier la biellette à la liaison pivot.

Aussi, avantageusement, dans un autre mode de réalisation, la liaison pivot centrale peut comprendre un cylindre interne d'axe transversal solidaire de l'un des bras transversaux emboîté avec pivotement à l'intérieur de deux cylindres externes d'axe transversal solidaires de l'autre bras transversal et espacés transversalement. L'extrémité arrière de la biellette peut alors comprendre un cylindre emboîté avec pivotement sur le cylindre interne de la liaison pivot, entre les deux cylindres externes. Ceci permet de limiter l'encombrement verticalement de la liaison biellette-liaison pivot.

En particulier, le cylindre interne peut être solidaire d'une extrémité d'un bras transversal et s'étendre dans le prolongement de celle-ci suivant la direction transversale, et les deux cylindres externes peuvent être reliés à l'autre bras transversal suivant une direction perpendiculaire à la direction transversale. Les deux bras transversaux sont ainsi disposés au moins en partie sensiblement le long l'un de l'autre transversalement. Ceci permet de choisir la position relative des deux bras la plus favorable compte tenu des pièces environnant le train arrière.

Dans ces deux modes de réalisation, le pivotement des cylindres les uns par rapport aux autres pourra être obtenu par des roulements disposés radialement entre les cylindres ou des bagues en polymère glissant en rotation.

L'invention concerne également un véhicule automobile, notamment un véhicule utilitaire, équipé d'un train arrière selon l'invention.

L'invention est maintenant décrite en référence aux dessins annexés, non limitatifs, dans lesquels :
[Fig. 1] La figure 1 représente schématiquement en perspective un train arrière selon l'art antérieur.
[Fig. 2] La figure 2 représente schématiquement en perspective un train arrière selon un mode de réalisation de l'invention.
[Fig. 3] La figure 3 représente schématiquement en perspective un train arrière selon un autre mode de réalisation de l'invention.
[Fig. 4] La figure 4 représente schématiquement une vue en coupe transversale d'un train arrière selon un mode de réalisation de l'invention en situation de pompage.
[Fig. 5] La figure 5 représente schématiquement une vue en coupe transversale d'un train arrière selon un autre mode de réalisation de l'invention en situation de pompage).

Dans la présente description, les termes avant, arrière, supérieur, inférieur, font référence aux directions avant et arrière du véhicule ou du train arrière, lorsque ce dernier est monté sur le véhicule, autrement dit en position d'utilisation du train arrière. Les axes X, Y, Z, correspondent respectivement à l'axe longitudinal (d'avant en arrière), transversal et vertical du véhicule, ce dernier reposant sur le sol, ou du train arrière en position d'utilisation. La direction verticale correspond ainsi à la direction de la gravité. Les directions longitudinale et transversale sont situées dans un plan horizontal lorsque le véhicule repose, notamment à vide, sur un sol horizontal (perpendiculaire à la direction verticale).

Par sensiblement longitudinal, transversal, ou vertical, on entend une direction/un plan formant un angle d'au plus ±20°, voire d'au plus ±10° ou d'au plus ±5°, avec une direction/un plan longitudinal, transversal, ou vertical.

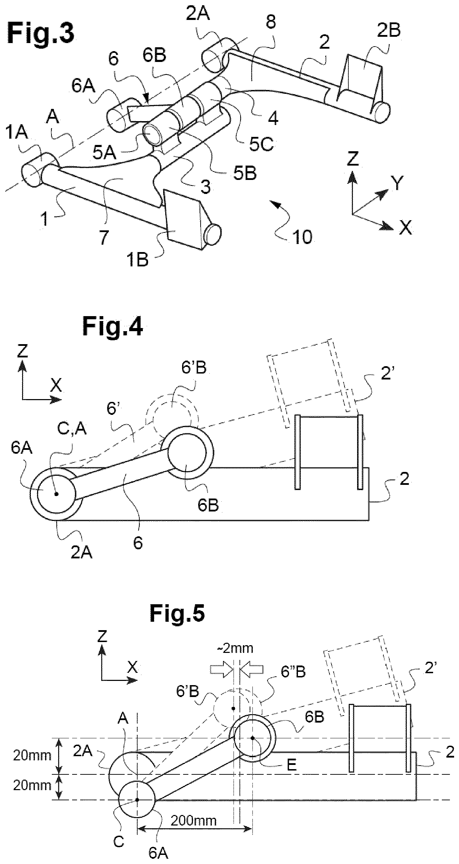

Les figures 2 et 3 représentent un train arrière 10 de véhicule automobile du type à deux bras tirés longitudinaux selon l'invention.

Le train arrière 10 présente ainsi deux bras tirés 1, 2 s'étendant suivant la direction longitudinale X. Chaque bras tiré 1, 2 présente une extrémité avant 1A, 2A, respectivement, destinée à être reliée à la caisse du véhicule par une articulation d'axe transversal. Dans ce type de train arrière, les axes de rotation de ces articulations sont confondus et forment l'axe de rotation A du train arrière. Ce dernier est donc aussi défini par les extrémités avant 1A, 2A des deux bras tirés 1, 2.

Les articulations reliant les bras tirés 1, 2 à la caisse sont en général des articulations élastiques, aussi appelées « bushing » ou « silent bloc ». Ce type d'articulation, bien connu, comprend typiquement deux tubes coaxiaux montés à rotation l'un par rapport à l'autre et séparés par un bloc de matériau polymère. Une articulation élastique est habituellement montée à l'intérieur d'une douille, le tube externe étant solidaire de cette douille. Sur les figures 2 et 3, les extrémités avant 1A, 2A forment ainsi des douilles de réception pour des articulations élastiques.

Chaque bras tiré 1, 2 présente en outre à une extrémité arrière un support de fusée 1B, 2B, respectivement.

Le train arrière 10 comporte également deux bras transversaux 3, 4 présentant chacun une extrémité solidaire d'un bras tiré. Ces bras transversaux 3, 4 sont reliés l'un à l'autre par une liaison pivot 5 d'axe de rotation transversal.

Cette liaison pivot 5 est située en une position médiane transversalement du train arrière, en arrière longitudinalement des extrémités avant 1A, 2A des bras tirés, et au dessus verticalement de l'axe de rotation A du train arrière. Cette position permet un braquage cinématique sous-vireur du train arrière.

Le train arrière 10 comprend en outre une biellette 6 présentant une extrémité avant 6A destinée à être reliée à la caisse du véhicule par une articulation de type rotule présentant au moins un axe de rotation transversal et au moins un axe de rotation longitudinal, et une extrémité arrière 6B reliée à la liaison pivot 5 par une articulation d'axe de rotation transversal.

Dans l'exemple représenté sur les figures 2 et 3, la liaison pivot centrale 5 comprend un cylindre interne 5A d'axe transversal solidaire de l'un des bras transversaux, ici le bras transversal 4, emboîté avec pivotement à l'intérieur de deux cylindres 5B, 5C externes d'axe transversal, solidaires de l'autre bras transversal 3 et espacés transversalement. L'extrémité arrière 6B de la biellette présente ici une forme de cylindre emboîté avec pivotement sur le cylindre interne 5A de la liaison pivot, entre les deux cylindres externes 5B, 5C. Pour assurer la rotation de la liaison pivot 5, des roulements (non représentés) sont disposés radialement entre le cylindre interne 5A et les cylindres 5B, 5C et 6B. On utilisera généralement des roulements à aiguilles à cet effet.

Une telle réalisation de la liaison pivot 5 par emboîtement de cylindres offre une certaine liberté dans la conception de la forme et les positions relatives des bras transversaux 3, 4. Ainsi, dans l'exemple, le bras transversal 3 est situé en dessous du bras transversal 4, les deux cylindres externes 5B, 5C étant reliés à au bras transversal 4 suivant une direction perpendiculaire à la direction transversale, ici sensiblement verticale. On notera que la liaison entre le bras transversal 4 et les deux cylindres externes 5B, 5C peut néanmoins s'effectuer suivant une autre direction perpendiculaire à la direction transversale tant que les bras transversaux 3, 4 ne gênent pas les mouvements de la biellette 6. Ainsi, la forme du bras transversal 3 (sensiblement rectiligne et transversal) représentée sur la figure 2 pourrait être modifiée selon les dimensions du train arrière, les positions relatives des deux bras transversaux, les pièces environnant le train arrière, etc.

Dans ce mode de réalisation, le cylindre interne 5A est solidaire d'une extrémité d'un bras transversal 4 et s'étend dans le prolongement de celle-ci suivant la direction transversale. Dans cet exemple, le bras transversal 4 présente ainsi une forme coudée. L'invention n'est toutefois pas limitée à cette forme particulière.

On notera en particulier que la biellette pourrait être montée par-dessus la liaison pivot 5 du train arrière représenté figure 1.

Chaque bras tiré et le bras transversal associé pourra être réalisé par soudage/ encastrement de différentes parties, tel que représenté figure 2, ou être réalisé d'une pièce brute de fonderie, ou encore être réalisé par caissonnage, tel que représenté figure 3, sur laquelle les bras tirés 1, 2 sont reliés aux bras transversaux 3, 4 par des coquilles soudées 7, 8 respectivement.

Dans l'exemple représenté sur les figures 2 à 4, l'extrémité avant 6A de la biellette 6 est située à mi-distance des extrémités avant des bras tirés, sur l'axe de rotation du train arrière. Autrement dit, l'axe de rotation C de l'extrémité avant de la biellette est confondu avec l'axe de rotation A du train arrière. Comme on peut le voir sur la figure 4, montrant la position de la biellette sans débattement (bras tiré 2 horizontal) et avec débattement (bras tiré 2' pivoté vers le haut, les mêmes pièces sont référencées avec la même référence suivie d'un prime), cette position de l'extrémité avant 6A sur l'axe de rotation A, à mi-distance des extrémités 1A, 2A garantit un débattement non contraint en pompage du train arrière, la biellette pivotant autour de son extrémité 6A, son extrémité opposée étant ainsi déplacée vers le haut dans la position 6'B.

En variante, l'extrémité avant 6A de la biellette 6, plus précisément son axe de rotation C, pourrait être dans un plan horizontal situé sous l'axe de rotation A du train arrière, tel que représenté schématiquement sur la figure 5. Cette figure montre la position de la biellette sans débattement (bras tiré 2 horizontal) et avec débattement (bras tiré 2' pivoté vers le haut, les mêmes pièces sont référencées avec la même référence suivie d'un prime). Dans l'exemple représenté, l'axe de rotation C de l'extrémité avant 6A de la biellette est positionné 20mm sous l'axe de rotation A du train arrière.

Sur un débattement vertical du train arrière d'environ 50mm, on a en général une variation de pince d'environ 16' lié au contre carrossage de la roue qui se transforme en pince. Sur un bras tiré (ici de 550mm de long), cela correspond à une rotation d'environ 5°. Pour combattre cette prise de pince de 8' par roue, l'entraxe des extrémités avant 1A, 2A du train arrière étant de 1200mm environ, on aurait besoin de contraindre le pivot central vers l'avant de 600mm*8' =600*2,5mrad = 1,5mm.

En ancrant la biellette sur un point de la caisse plus bas que les extrémités avant 1A, 2A du train arrière, avec une biellette faisant environ 200mm de long et un centre de torsion E 20mm plus haut que l'axe de rotation A du train arrière (en position horizontale des bras tirés), on obtient, lors de la rotation du bras tiré, une avancée de l'extrémité 6'B de la biellette de 2mm par rapport à la position 6"B de l'extrémité de la biellette dans une situation d'ancrage de la biellette sur l'axe de rotation A du train arrière. Le décalage de l'extrémité 6'B de la biellette ainsi obtenu est de l'ordre de grandeur cherché pour maintenir la pince à une valeur constante en pompage (un calcul plus précis pourrait être réalisé en connaissant les flexibilités des bras tirés et bras transversaux et celles des articulations). Cela permet d'utiliser des valeurs de contre carrossage initiales importantes, sans pour autant avoir trop de pince et une usure des pneus quand on roule en charge.

## Revendications

1. Train arrière (10) de véhicule automobile du type à deux bras tirés longitudinaux (1, 2), dans lequel chaque bras tiré présente une extrémité avant (1A, 2A) destinée à être reliée à la caisse du véhicule par une articulation d'axe transversal et un support de fusée (1B, 2B) à une extrémité arrière, le train arrière comportant deux bras transversaux (3, 4) présentant chacun une extrémité solidaire d'un bras tiré et reliés l'un à l'autre par une liaison pivot (5) d'axe de rotation transversal située en une position médiane transversalement du train arrière, en arrière des extrémités avant des bras tirés et au dessus verticalement d'un axe de rotation du train arrière défini par les extrémités avant des deux bras tirés, **caractérisé en ce qu'**il comprend une biellette (6) présentant une extrémité avant (6A) destinée à être reliée à la caisse du véhicule par une articulation présentant au moins un axe de rotation transversal et au moins un axe de rotation longitudinal et une extrémité arrière (6B) reliée à la liaison pivot (5) par une articulation d'axe de rotation transversal.

2. Train arrière (10) selon la revendication 1, **caractérisé en ce que** l'extrémité avant (6A) de la biellette est située à mi-distance des extrémités avant (1A, 2A) des bras tirés, en alignement avec celles-ci.

3. Train arrière (10) selon la revendication 1, **caractérisé en ce que** l'extrémité avant de la biellette (6A) est située à mi-distance des extrémités avant (1A, 2A) des bras tirés, dans un plan horizontal situé verticalement sous les extrémités avant des bras tirés.

4. Train arrière (10) selon la revendication 3, **caractérisé en ce que** le plan contenant l'extrémité avant (6A) de la biellette est situé à une distance d'un plan parallèle contenant les extrémités avant (1A, 2A) des bras tirés, non nulle, inférieure ou égale à une valeur seuil.

5. Train arrière (10) selon l'une quelconque des revendications 1 à 4, **caractérisé en ce que** la biellette est inclinée par rapport à un plan horizontal d'un angle de 3 à 30°, le train arrière étant dans une position d'utilisation à vide, dans laquelle il est monté dans un véhicule reposant sur un sol horizontal.

6. Train arrière (10) selon l'une quelconque des revendications 1 à 5, **caractérisé en ce que** la liaison pivot centrale (5) comprend un cylindre interne emboîté avec pivotement à l'intérieur d'un cylindre externe, chaque cylindre d'axe transversal étant solidaire de l'un des bras transversaux, et **en ce que** l'extrémité arrière (6B) de la biellette comprend un cylindre emboîté avec pivotement sur le cylindre externe de la liaison pivot.

7. Train arrière (10) selon la revendication 6, **caractérisé en ce que** chaque cylindre est solidaire d'une extrémité d'un bras transversal et s'étend dans le prolongement de celle-ci suivant la direction transversale.

8. Train arrière (10) selon l'une quelconque des revendications 1 à 5, **caractérisé en ce que** la liaison pivot centrale (5) comprend un cylindre interne (5A) d'axe transversal solidaire de l'un (4) des bras transversaux emboîté avec pivotement à l'intérieur de deux cylindres externes (5B, 5C) d'axe transversal solidaires de l'autre bras transversal (3) et espacés transversalement, et **en ce que** l'extrémité arrière (6B) de la biellette comprend un cylindre emboîté avec pivotement sur le cylindre interne de la liaison pivot, entre les deux cylindres externes.

9. Train arrière (10) selon la revendication 8, **caractérisé en ce que**:
- le cylindre interne (5A) est solidaire d'une extrémité d'un bras transversal et s'étend dans le prolongement de celle-ci suivant la direction transversale,
- les deux cylindres externes sont reliés à l'autre bras transversal suivant une direction perpendiculaire à la direction transversale.

10. Véhicule comprenant un train arrière (10) selon l'une quelconque des revendications 1 à 9.

## Patentansprüche

1. Hinterradaufhängung (10) eines Kraftfahrzeugs vom Typ mit zwei Längslenkern (1, 2), wobei jeder Längslenker ein vorderes Ende (1A, 2A), das dazu bestimmt ist, mit der Karosserie des Fahrzeugs durch ein Gelenk mit quer verlaufender Achse verbunden zu werden, und einen Achsschenkelträger (1B, 2B) an einem hinteren Ende aufweist, wobei die Hinterradaufhängung zwei Querlenker (3, 4) umfasst, die jeweils ein mit einem Längslenker fest verbundenes Ende aufweisen und miteinander durch eine Schwenkverbindung (5) mit quer verlaufender Drehachse verbunden sind, die sich in einer mittleren Position quer zur Hinterradaufhängung, hinter den vorderen Enden der Längslenker und vertikal über einer durch die vorderen Enden der beiden Längslenker definierten Drehachse der Hinterradaufhängung befindet, **dadurch gekennzeichnet, dass** sie einen Schwingarm (6) umfasst, der ein vorderes Ende (6A) aufweist, das dazu bestimmt ist, mit der Karosserie des Fahrzeugs durch ein Gelenk verbunden zu werden, das mindestens eine quer verlaufende Drehachse und mindestens eine längs verlaufende Drehachse aufweist, und ein hinteres Ende (6B), das mit der Schwenkverbindung (5) durch ein Gelenk mit quer verlaufender Drehachse verbunden ist.

2. Hinterradaufhängung (10) nach Anspruch 1, **dadurch gekennzeichnet, dass** sich das vordere Ende (6A) des Schwingarmes in der Mitte zwischen den vorderen Enden (1A, 2A) der Längslenker befindet und zu diesen ausgerichtet ist.

3. Hinterradaufhängung (10) nach Anspruch 1, **dadurch gekennzeichnet, dass** sich das vordere Ende (6A) des Schwingarmes in der Mitte zwischen den vorderen Enden (1A, 2A) der Längslenker befindet, in einer horizontalen Ebene, die sich vertikal unter den vorderen Enden der Längslenker befindet.

4. Hinterradaufhängung (10) nach Anspruch 3, **dadurch gekennzeichnet, dass** sich die Ebene, die das vordere Ende (6A) des Schwingarmes enthält, in einem Abstand von einer die vorderen Enden (1A, 2A) der Längslenker enthaltenden Ebene befindet, der von null verschieden und kleiner oder gleich einem Schwellenwert ist.

5. Hinterradaufhängung (10) nach einem der Ansprüche 1 bis 4, **dadurch gekennzeichnet, dass** der Schwingarm bezüglich einer horizontalen Ebene in einem Winkel von 3 bis 30° geneigt ist, wenn sich die Hinterradaufhängung in einer unbelasteten Betriebsposition befindet, in der sie in einem Fahrzeug angebracht ist, das auf einem horizontalen Boden ruht.

6. Hinterradaufhängung (10) nach einem der Ansprüche 1 bis 5, **dadurch gekennzeichnet, dass** die zentrale Schwenkverbindung (5) einen inneren Zylinder umfasst, der schwenkbar ins Innere eines äußeren Zylinders eingefügt ist, wobei jeder Zylinder mit quer verlaufender Achse mit einem der Querlenker fest verbunden ist, und dadurch, dass das hintere Ende (6B) des Schwingarmes einen Zylinder umfasst, der schwenkbar auf den äußeren Zylinder der Schwenkverbindung aufgesteckt ist.

7. Hinterradaufhängung (10) nach Anspruch 6, **dadurch gekennzeichnet, dass** jeder Zylinder mit einem Ende eines Querlenkers fest verbunden ist und sich in der Verlängerung desselben in der Querrichtung erstreckt.

8. Hinterradaufhängung (10) nach einem der Ansprüche 1 bis 5, **dadurch gekennzeichnet, dass** die zentrale Schwenkverbindung (5) einen inneren Zylinder (5A) mit quer verlaufender Achse umfasst, der mit einem (4) der Querlenker fest verbunden ist und schwenkbar ins Innere von zwei äußeren Zylindern (5B, 5C) mit quer verlaufender Achse eingefügt ist, die mit dem anderen Querlenker (3) fest verbunden sind und in Querrichtung beabstandet sind, und dadurch, dass das hintere Ende (6B) des Schwingarmes einen Zylinder umfasst, der zwischen den zwei äußeren Zylindern schwenkbar auf den inneren Zylinder der Schwenkverbindung aufgesteckt ist.

9. Hinterradaufhängung (10) nach Anspruch 8, **dadurch gekennzeichnet, dass**:
- der innere Zylinder (5A) mit einem Ende eines Querlenkers fest verbunden ist und sich in der Verlängerung desselben in der Querrichtung erstreckt,
- die zwei äußeren Zylinder mit dem anderen Querlenker entlang einer zur Querrichtung senkrechten Richtung verbunden sind.

10. Fahrzeug, welches eine Hinterradaufhängung (10) nach einem der Ansprüche 1 bis 9 umfasst.

## Claims

1. Motor vehicle rear suspension (10) of the type having two longitudinal trailing arms (1, 2), wherein each trailing arm has a front end (1A, 2A) intended to be connected to the body of the vehicle by an articulation of transverse axis and a stub-axle carrier (1B, 2B) at a rear end, the rear suspension comprising two transverse struts (3, 4) each having one end secured to a trailing arm and being connected to one another by a pivot connection (5) of transverse axis of rotation situated in a transversely median position of the rear suspension, to the rear of the front ends of the trailing arms and vertically above an axis of rotation of the rear suspension which is defined by the front ends of the two trailing arms, **characterized in that** it comprises a link (6) having a front end (6A) intended to be connected to the body of the vehicle by an articulation having at least one transverse axis of rotation and at least one longitudinal axis of rotation, and a rear end (6B) connected to the pivot connection (5) by an articulation of transverse axis of rotation.

2. Rear suspension (10) according to Claim 1, **characterized in that** the front end (6A) of the link is situated midway between the front ends (1A, 2A) of the trailing arms, in alignment therewith.

3. Rear suspension (10) according to Claim 1, **characterized in that** the front end of the link (6A) is situated midway between the front ends (1A, 2A) of the trailing arms, in a horizontal plane situated vertically below the front ends of the trailing arms.

4. Rear suspension (10) according to Claim 3, **characterized in that** the plane containing the front end (6A) of the link is situated at a distance from a parallel plane containing the front ends (1A, 2A) of the trailing arms that is nonzero and less than or equal to a threshold value.

5. Rear suspension (10) according to any one of Claims 1 to 4, **characterized in that** the link is inclined with respect to a horizontal plane by an angle of 3 to 30°, the rear suspension being in an unladen service position in which it is mounted in a vehicle resting on horizontal ground.

6. Rear suspension (10) according to any one of Claims 1 to 5, **characterized in that** the central pivot connection (5) comprises an inner cylinder which is pushed with the ability to pivot inside an outer cylinder, each cylinder of transverse axis being secured to one of the transverse struts, and **in that** the rear end (6B) of the link comprises a cylinder which is pushed with the ability to pivot onto the outer cylinder of the pivot connection.

7. Rear suspension (10) according to Claim 6, **characterized in that** each cylinder is secured to one end of a transverse strut and extends in the continuation thereof in the transverse direction.

8. Rear suspension (10) according to any one of Claims 1 to 5, **characterized in that** the central pivot connection (5) comprises an inner cylinder (5A) of transverse axis which is secured to one (4) of the transverse struts which is pushed with the ability to pivot inside two outer cylinders (5B, 5C) of transverse axis which are secured to the other transverse strut (3) and spaced apart transversely, and **in that** the rear end (6B) of the link comprises a cylinder which is pushed with the ability to pivot onto the inner cylinder of the pivot connection, between the two outer cylinders.

9. Rear suspension (10) according to Claim 8, **characterized in that**:
- the inner cylinder (5A) is secured to one end of a transverse strut and extends in the continuation thereof in the transverse direction,
- the two outer cylinders are connected to the other transverse strut in a direction perpendicular to the transverse direction.

10. Vehicle (10) comprising a rear suspension (10) according to any one of Claims 1 to 9.
